# EUROPÄISCHE PATENTANMELDUNG

(11) **EP 1 591 036 A2**
(43) Veröffentlichungstag der Anmeldung: **02.11.2005**
(21) Anmeldenummer: 05005439.4
(22) Anmeldetag: 26.03.2005
(51) Int. Cl.: A46B 3/04

(54) **Pinsel für kosmetische Produkte**

(30) Priorität: 26.04.2004 DE 102004020713
(71) Anmelder: Beiersdorf AG, 20253 Hamburg (DE)
(72) Erfinder: Eckers, Lorenz, 21255 Tostedt (DE); Hahl, Michael, 22299 Hamburg (DE)

(57) **Zusammenfassung**

Kosmetische und/oder dermatologischer Pinsel, dadurch gekennzeichnet, dass mindestens ein multifiles Borstenbündel und einem Schaft gehalten wird, wobei das eine Ende des Borstenbündels durch Umspritzen mit thermoplastischen Material im Schaft fixiert ist.

## Beschreibung

Die Erfindung betrifft einen Pinsel für kosmetische und/oder dermatologische Produkte, der aufgrund seiner Borstenanordnung einen erhöhtes Substrataufnahmevermögen (Depotwirkung) hat. Bevorzugt ist der Pinsel als Nagellackpinsel verwendbar.

Pinsel für kosmetische und dermatologische Produkte gibt es sehr viele. Im kosmetischen Bereich werden Pinsel insbesondere zum Auftragen von Schminkprodukten, wie zum Beispiel zum Auftragen von Nagellacken, Schminken, Haarfarben und Lippenfarben verwendet. Zu den im dermatologischen Produkten zählen insbesondere Wund-/Haut-/Oberflächendesinfektionsmittel und wirkstoffhaltige Zubereitungen.

Die Herstellung von Pinseln erfolgt am einfachsten dadurch, dass eine Vielzahl von einzelnen Borsten zu einem Bündel zusammengefasst werden, welches dann in einer Halterung, dem Schaft, befestigt wird. Je nach Größe des herzustellenden Pinsels, kommen dabei verschiedene Befestigungsmethoden zum Einsatz. Der Borsten besetzte Schaft weist im Allgemeinen auf der den Borsten gegenüberliegenden Seite einen Stiel auf, der zum Anfassen oder Einspannen des Pinsels bei der Anwendung dient. Für die Verbindung von Stiel und Schaft lassen sich im Stand der Technik viele Methoden finden. Auch ist eine Herstellung von Stiel und Schaft in einen Stück, z. B. im Spritzgussverfahren, nicht unbekannt.

Bei Pinseln mit geringem Durchmesser hat sich eine Methode etabliert, wie sie z. B. in der DE 695 18 867 T1 beschrieben ist (Ankerverfahren). Ein großer Nachteil dieses Herstellungsverfahren sind die im fertigen Produkt vorhandenen Spalten und Zwischenräume zwischen Borsten und Schaft. Hier können sich Ablagerungen und Verkeimungen bilden. Auch ist nicht jedes Fasermaterial als Borsten geeignet.

In der DE 695 07 669 T1 wird ein Nagellackpinsel aufgezeigt, dessen Stiel und Auftragsorgan (hier Schleife, Spachtel oder Borsten) einstückig hergestellt werden, das heißt, das Auftragsorgan und Stiel gleichzeitig oder nacheinander durch Spritzguss (Zwei-/Mehrkomponentenspritzguss) gefertigt werden. Der Nachteil dieses Pinsels ist die geringe Anzahl relativ unflexibler Borsten. Da im Spritzgussverfahren ein minimaler Kanaldurchmesser nicht unterschritten werden darf, weisen die so hergestellten Borsten einen - im Vergleich zu im Ankerverfahren hergestellten Pinseln - sehr großen Querschnitt auf. Die dadurch hervorgerufene Steifheit muss durch Maßnahmen wie Flexibler Pinselstiel oder weiche Borsten aufwendig korrigiert werden.

Aus dem Bereich der Mundhygiene, sind ankerfreie Bürstenfertigungsverfahren bekannt, bei denen vorgeformte Borstenbündel unter Einsatz von Spritzgusstechniken umspritzt werden. Die DE 44 15 886 A1 beschreibt die Herstellung einer solchen Zahnbürste. Der große Vorteil der Umspritzung ist, dass die Borsten selbst nicht aus spritzbaren Materialien bestehen müssen. Ebenso ist der spaltfreie Abschluss zwischen Schaft und Borste sehr vorteilhaft für Hygieneartikel.

Die aus dem Stand der Technik bekannten Pinsel für kosmetische und/oder dermatologische Produkte weisen einen sehr geringe Substrataufnahmekapazität auf, da die Zwischenräume zwischen den Borsten aufgrund der Befestigung im Schaft nicht beliebig variiert werden können. Insbesondere beim Ankerverfahren, werden die Borsten in den Schaft eingequetscht um den nötigen Halt zu garantieren.

Da man aus Kostengründen fast ausschließlich Pinsel verwendet, die nach dem Ankerverfahren hergestellt werden, stellt die Verkeimung und die Bildung von Ankrustungen im Bereich des Schaftes ein Problem dar.

Beide Nachteile führen beim Verbraucher zu Unmut, da er im ersten Fall zu oft den Pinsel mit Substrat benetzen muss bzw. sich ablösende Ankrustungen das Resultat der Auftragung verschlechtern. Sicherlich lässt sich die Menge des aufgenommenen Substrates durch dessen rheologische Kennwerte optimieren, jedoch geht mit dieser Optimierung im Allgemeinen eine Verschlechterung des Auftragsresultats einher. Höhere Viskositäten oder Thixotropie wirken sich negativ auf die Verlaufseigenschaften des Substrates und damit auf die Beschichtungsqualität aus.

Ausgehend von diesem bekannten Stand der Technik ist es Aufgabe der Erfindung, einen kosmetischen und/oder dermatologischen Pinsel zur Verfügung zu stellen,
- der mindestens eine multifile Gruppe von Borsten aufweist, die an ihrem einen Ende durch Umspritzung mit thermoplastischen Material in einem Schaft fixiert ist,
- der eine hohe Substrataufnahmekapazität besitzt,
- der keine Zwischenräume, Fugen, Spalten o.ä. zwischen den Borsten und dem Schaft aufweist und
- dessen Borsten eine ausreichende Flexibilität aufweisen um eine gleichmäßigen , schlierenfreien und glatten Substratauftrag zu ermöglichen.

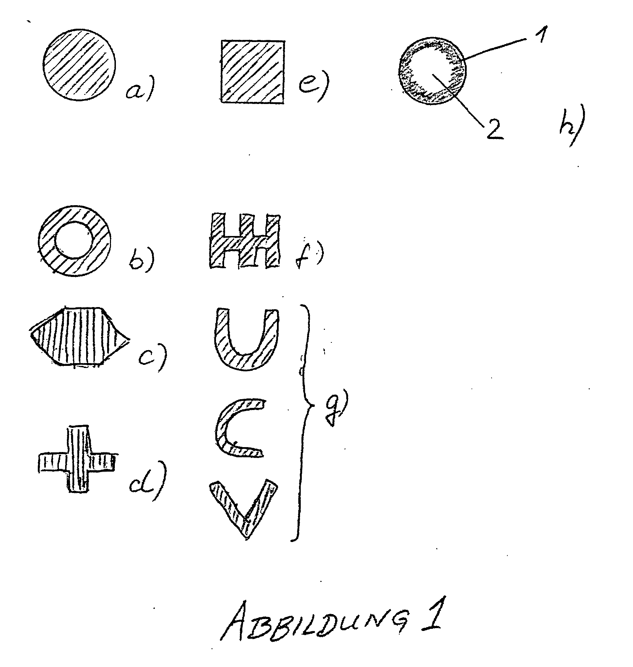

Erfindungsgemäß ist auch, das die multifile Gruppe von Borsten einen nicht kreisrunden Querschnitt besitzt. Insbesondere kann das Büschel einen Querschnitt in Form eines Habmondes, einen ovalen oder kreuzförmigen Querschnitt aufweisen. Ganz besonders vorteilhaft ist es, wenn die einzelne multifile Borstengruppe eine nicht homogen mit Borsten besetzte Querschnittsfläche aufweist. In Abbildung 1 sind einige vorteilhafte Querschnitte von multifilen Borstengruppen schematisch wiedergegeben.

Auch ist die symmetrisch oder asymmetrische Anordnung von zwei oder mehr multifilen Borstengruppen erfindungsgemäß.

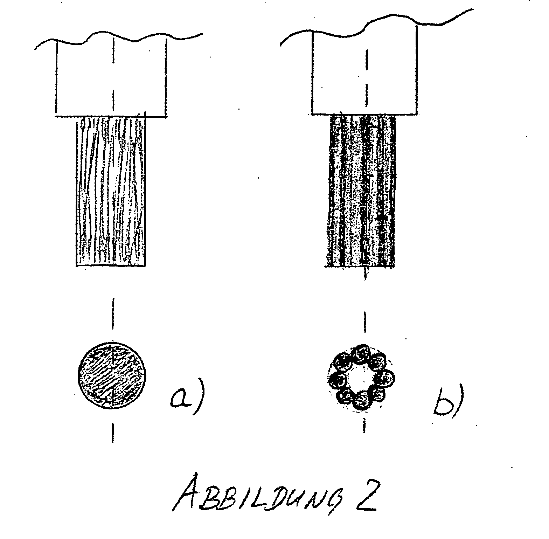

Bevorzugt sind Borstengruppenanordnungen die im Inneren große Zwischenräume aufweisen, welche eine große Substrataufnahmekapazität (Depotwirkung) hervorrufen. Ganz besonders bevorzugt, sind ringförmige Borstenanordnungen bzw. kreisförmige Borstengruppenanordnungen, (s. Abbildung 2)

Erfindungsgemäß können Borsten aus allen Materialien verwendet werden, die sich durch umspritzen fixieren lassen. Insbesondere eignen sich thermoplastische Materialien, die eine sehr innige Verbindung - verschmelzen - mit dem Material des Schaftes eingehen. Der Schmelzpunkt der Borsten sollte dabei nicht wesentlich unter der Spitztemperatur des Schaftes liegen.

Erfindungsgemäße Pinsel können Borsten aus unterschiedlichen Materialien aufweisen, die gemischt oder geordnet angeordnet werden. Insbesondere vorteilhaft ist die Anordnung von Borsten unterschiedlicher Flexibilität, so dass sich Ringe bzw. Kreissegmente gleicher Borstenart ausbilden.

Insbesondere erfindungsgemäß sind Borsten aus Nylon, Polyethylen, Polypropylen, Polyamid, flüssig-kristallinen Kunststoffen.

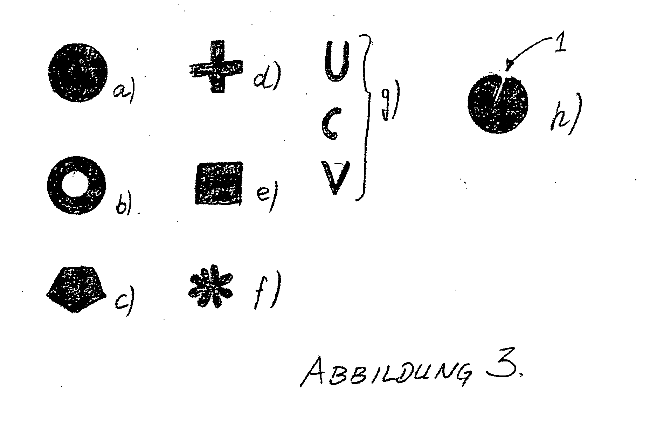

Erfindungsgemäß ist auch, das die einzelnen Borsten einen nicht kreisrunden Querschnitt besitzen. Die Borsten können Querschnitte aufweisen, deren Form in der Gruppe der kreisförmigen, ringförmigen, polygonalen, kreuzartigen, rechteckigen, viellappigen, U-, C- oder V-förmigen Formen ausgewählt ist oder sie weisen mindestens eine Kapillarrille auf. Durch strukturierte bzw. rauhe Borstenoberflächen lassen sich hohe Substrataufnahmeraten des Pinsels erreichen. Das freie Ende der Borsten kann auch in verjüngter oder verdickter Form ausgebildet sein, die beispielsweise durch Schleifen, Kardieren und/oder Abflammen, erzielt wurde. Einige vorteilhafte Borstenquerschnitte sind in Abbildung 3 wiedergegeben.

Die Borsten der erfindungsgemäßen Pinsel können unterschiedliche Farben aufweisen, insbesondere können Borsten aus unterschiedlichem Material auch unterschiedliche Farben aufweisen.

Die Anzahl der Borsten pro multifiler Gruppe ist begrenzt durch die Querschnitt der Borsten. Erfindungsgemäße Pinsel weisen eine Borstenzahl von 50 bis 500 Borsten pro mm² der von der multifilen Gruppe bedeckten Fläche auf.

Der Querschnitt der Borsten liegt im Bereich von 0,02 mm bis 0,20 mm, ganz besonders geeignet sind Querschnitte von 0,03 mm bis 0,15 mm.

Erfindungsgemäß liegt die Anzahl der Borsten in einem Pinsel zwischen 50 und 5000 Borsten.

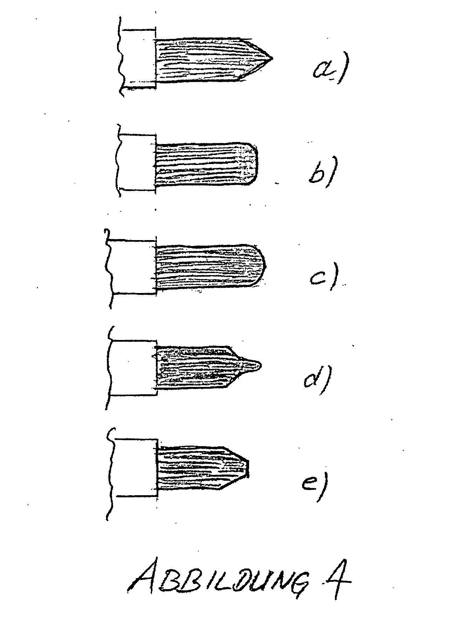

Erfindungsgemäße Pinsel haben Borsten, die zwischen 2 und 40 mm aus dem Schaft heraus ragen. Das von den Borsten gebildete freie Ende muss erfindungsgemäß nicht geradlinig sein, bevorzugte Pinselausführungen haben ein spitzes, abgerundetes, halbkugelförmiges, trichterförmiges oder kegelstumpfförmiges Ende. (s. Abbildung 4)

Im folgenden wird der erfindungsgemäße kosmetische und/oder dermatologischer Pinsel anhand von Ausführungsbeispielen beschrieben. Die Erfindung soll jedoch nicht auf die in den Abbildungen wiedergegebenen Beispiele eingeschränkt sein, welche nur zur visuellen Unterstützung der Beschreibung dienen.

### Abbildung 1

Beispiele von multifilen Borstenbündeln mit (a) kreisförmigen, (b) ringförmigen, (c) polygonalen, (d) kreuzartigen, (e) rechteckigen, (f) viellappigen, (g) U-, C- oder V-förmigen axialen Bündelquerschnitt. Abbildung 1 h zeigt beispielhaft die nichthomogene Verteilung der Borsten über den Querschnitt des Borstenbündels mit einem Bereich 1 hoher Borstendicht und einem Bereich 2 geringerer Borstendichte.

### Abbildung 2

Beispiele erfindungsgemäßer Pinselausführungen mit (a) ringförmiger Borstenanordnungen und (b) kreisförmiger Anordnung von acht Borstengruppen als axialer und vertikaler Querschnitt.

### Abbildung 3

Beispiele erfindungsgemäßer Pinselausführungen mit (a) kreisförmigen, (b) ringförmigen, (c) polygonalen, (d) kreuzartigen, (e) rechteckigen, (f) viellappigen, (g) U-, C- oder V-förmigen axialen Borstenquerschnitt. Abbildung 3h zeigt beispielhaft eine Borste mit Kapillarrille 1.

### Abbildung 4

Beispiele erfindungsgemäßer Pinselausführungen mit (a) spitzem, (b) abgerundetem, (c) halbkugelförmigem, (d) trichterförmigen und (e) kegelstumpfförmigern Pinselende.

## Patentansprüche

1. Kosmetische und/oder dermatologischer Pinsel, **dadurch gekennzeichnet, dass** mindestens ein multifiles Borstenbündel in einem Schaft gehalten wird, wobei das eine Ende des Borstenbündels durch Umspritzen mit thermoplastischen Material im Schaft fixiert ist.

2. Kosmetischer und/oder dermatologischer Pinsel nach Anspruch 1, **dadurch gekennzeichnet, dass** der borstenbesetzte Schaft mit einem Stiel versehen ist.

3. Kosmetischer und/oder dermatologischer Pinsel nach mindesten einem der vorhergehenden Ansprüche, **dadurch gekennzeichnet, dass** eine oder mehrere multifile Gruppen von Borsten einen nicht kreisrunden Querschnitt besitzten, insbesondere einen Querschnitt in Form eines Habmondes, eines ovalen oder kreuzförmigen Querschnittes.

4. Kosmetischer und/oder dermatologischer Pinsel nach mindesten einem der vorhergehenden Ansprüche, **dadurch gekennzeichnet, dass** die einzelne multifile Borstengruppe eine nicht homogen mit Borsten besetzte Querschnittsfläche aufweist.

5. Kosmetischer und/oder dermatologischer Pinsel nach mindesten einem der vorhergehenden Ansprüche, **dadurch gekennzeichnet, dass** das freie Ende der Bosten eine Länge von 2 bis 40 mm aufweist.

6. Kosmetischer und/oder dermatologischer Pinsel nach mindesten einem der vorhergehenden Ansprüche, **dadurch gekennzeichnet, dass** ein einzelnes multifiles Borstenbündel aus 50 bis 500 Bosten besteht.

7. Kosmetischer und/oder dermatologischer Pinsel nach mindesten einem der vorhergehenden Ansprüche, **dadurch gekennzeichnet, dass** der Pinsel zwischen 50 und 5000 Borsten aufweist.

8. Kosmetischer und/oder dermatologischer Pinsel nach mindesten einem der vorhergehenden Ansprüche, **dadurch gekennzeichnet, dass** der Querschnitt der Borsten im Bereich von 0,02 mm bis 0,20 mm, insbesondere zwischen 0,03 mm bis 0,15 mm liegt.

9. Kosmetischer und/oder dermatologischer Pinsel nach mindesten einem der vorhergehenden Ansprüche, **dadurch gekennzeichnet, dass** das freie Ende der Borsten in verjüngter oder verdickter Form ausgebildet ist oder durch Schleifen, Kardieren und/oder Abflammen behandelt wurde.

10. Kosmetischer und/oder dermatologischer Pinsel nach mindesten einem der vorhergehenden Ansprüche, **dadurch gekennzeichnet, dass** die einzelnen Borsten einen Querschnitt aufweisen, deren Form in der Gruppe der kreisförmigen, ringförmigen, polygonalen, kreuzartigen, rechteckigen, viellappigen, U-, C- oder V-förmigen Formen ausgewählt ist.

11. Kosmetischer und/oder dermatologischer Pinsel nach mindesten einem der vorhergehenden Ansprüche, **dadurch gekennzeichnet, dass** die Borsten eine rauhe Oberfläche und/oder mindestens eine Kapillarrille aufweisen.

12. Verwendung eines Pinsels nach mindestens einem der Ansprüche 1 bis 11 als Nagellackpinsel.

13. Nagellackpinsel mit Depotwirkung, **dadurch gekennzeichnet** das, multifiles Borstenbündel in einem Schaft gehalten wird, wobei das eine Ende des Borstenbündels durch Umspritzen mit thermoplastischen Material im Schaft fixiert ist und der Borstenbesatz ringförmiger Ausprägung ist, wobei der Durchmesser des borstenfreien Innenraums mindestens 1/10 des Gesamtdurchmessers des Borstenbündels beträgt.

14. Verfahren zur Herstellung eines kosmetischer und/oder dermatologischer Pinsels, bei dem ein vorkonfektioniertes multifiles Borstenbündel an einem Ende mit thermoplastischen Material umspritzt wird, so dass sich ein borstenbesetzer Schaft ausbildet.

15. Verfahren zur Herstellung eines Nagellackpinses, bei dem ein vorkonfektioniertes multifiles Borstenbündel an einem Ende mit thermoplastischen Material umspritzt wird, so dass sich ein borstenbesetzer Schaft ausbildet.
